# EUROPEAN PATENT SPECIFICATION

(11) **EP 1 967 777 B1**
(45) Date of publication and mention of the grant of the patent: **07.10.2009**
(21) Application number: 08152064.5
(22) Date of filing: 28.02.2008
(51) Int. Cl.: F16K 31/04

(54) **Actuator for a multiway valve and connecting member for such an actuator**
Aktuator für ein Mehrweg-Ventil und Anschlusselement für einen solchen Aktuator
Actionneur pour soupape à voies multiples et élément de connexion pour un tel actionneur

(30) Priority: 05.03.2007 SE 0700594
(43) Date of publication of application: 10.09.2008
(73) Proprietor: Esbe AB, 330 21 Reftele (SE)
(72) Inventor: Kårhammer, Martin, 330 12 Forsheda (SE)
(74) Representative: Hjalmarsson, Magnus Axel

(56) References cited:
- JP-A- 2001 090 859
- US-A- 3 889 924

## Description

### Field of the Invention

The present invention relates to an actuator for a multiway valve, which comprises a valve housing having a valve head from which projects an outer end of a rotatable valve shaft, the valve head having connecting means for non-rotatable connection of the actuator to the valve housing, and the outer end of the valve shaft having connecting surfaces, which are arranged to cooperate in non-rotatable manner with a first end of a connecting member, which by an opposite second end is arranged to cooperate in non-rotatable manner with a rotatable operating shaft of the actuator.

The invention further concerns a connecting member for such a valve actuator.

### Background Art

In the case of motorised adjustment of multiway valves provided with a rotatable valve shaft, there are several different types of actuators with associated connecting members for engagement with said valve shaft.

A first type is disclosed in, for example, US 4 114 465 and comprises a connecting member in the form of a sleeve. The sleeve is arranged to be brought over the actuator's operating shaft and the valve shaft and to be locked to these by means of stop screws.

A second type is disclosed, for example, in DE 198 45 684 and comprises a connecting member, which at a first end has a sleeve portion and at a second end a ridge-shaped portion. The sleeve portion is arranged to be brought over the actuator's operating shaft and to be locked against it by means of a stop screw. The ridge-shaped portion, on the other hand, is intended to be inserted in a corresponding slot in the valve shaft and to be form-fittingly secured against rotation thereto.

A third type is disclosed in, for example, US 3 808 895 and comprises a connecting member, which at two opposite ends has recesses in the form of slots. These slots are intended to cooperate in a form-fitting manner with ridge-shaped end portions on the actuator's operating shaft and the valve shaft and, in this way, to secure in non-rotatable manner one shaft relative to the other.

Valve actuators and connecting members of this type are also known from the document JP 2001090859.

### Object of the Invention

A general drawback of the actuator and connecting member solutions described briefly above is that they are intended for one type or one size of valve shaft only. This means that a manufacturer of actuators always has to provide either two different actuators with connecting members included therein or two different connecting members for the same type of actuator as soon as the type or size of the valve shaft varies, which of course is unfavourable in terms of both manufacturing and storage costs. Yet, such type or size differences are not uncommon even when the manufacturer is one and the same. The reason for this is that the life and product cycle of valves generally are very long, whereas the life and, in particular, product cycle of actuators generally are much shorter. The odds that they will not be in phase are, therefore, relatively high. Thus, during the life of a valve several actuators will be used, the technical development of which is much faster. This also means that the plumber making the installation will often lack the appropriate actuators or connecting members.

In view of the above, it is an object of the invention to improve an actuator and connecting member as described by way of introduction in such a manner that the drawbacks associated with the previously known solutions are eliminated or at least reduced.

### Brief Description of the Invention

In an actuator as described by way of introduction, this is achieved by the connecting member being turnable and having at both ends, on the one hand, a central opening, one of which is arranged to cooperate in non-rotatable manner with the connecting surfaces on the outer end of a first type of valve shaft and the other of which is arranged to cooperate in non-rotatable manner with the connecting surfaces on the outer end of a second type of valve shaft, and, on the other hand, a gear rim, which surrounds the associated opening and which, when facing away from the valve head, is arranged to cooperate in non-rotatable manner with gear teeth provided on a mating end of one and the same type of operating shaft.

In a connecting member as described by way of introduction, this is achieved by it being turnable and having at both ends, on the one hand, a central opening, one of which is arranged to cooperate in non-rotatable manner with connecting surfaces on an outer end of a first type of valve shaft and the other of which is arranged to cooperate in non-rotatable manner with connecting surfaces on an outer end of a second type of valve shaft, and, on the other hand, a gear rim, which surrounds the associated opening and which, when facing the valve actuator, is arranged to cooperate in non-rotatable manner with gear teeth provided on a mating end of an operating shaft, which forms part of the valve actuator.

For a valve manufacturer, this means that owing to the invention it will be possible, for example when developing new valves, to choose the valve shaft solution that is most appropriate at the time essentially regardless of a previously chosen solution, since the same actuator can now be used for two different valve shaft types. For an actuator manufacturer, this means that owing to the invention it will be possible to halve the number of different actuators and connecting members for the different valves on the market. And, finally, for a plumber or a consumer this means, for instance, that the risk of purchasing the wrong type of actuator or connecting member for an existing valve is considerably reduced.

The central openings of the connecting member are preferably connected to each other to form a duct which extends through the whole connecting member. This offers the advantage that a screw from the actuator shaft can be inserted through the connecting member and screwed to the valve shaft for securing the actuator to the valve.

According to another preferred embodiment, the two gear rims of the connecting member are identical in shape. This is advantageous, in particular when striving to achieve the best possible form fit between the gear rims and the gear teeth on the mating end of the operating shaft of an actuator.

According to the invention, the gear rims preferably have gear teeth that are oriented in the same direction as the central openings of the connecting member. An advantage thereof is that, in this way, the connecting member will not have any laterally protruding parts, which facilitates its insertion in an actuator and also facilitates injection moulding.

Preferably, the connecting member is cylindrical and has a hexagonal circumferential surface. The hexagonal shape fits a spanner and, thus, makes it possible to turn, without difficulty, a valve shaft to the desired position of rotation when mounting an actuator on a valve.

Preferably, an indication groove is also provided, which extends along the connecting member between its two ends and which is arranged to indicate the position of rotation of the valve shaft. The groove allows the position of rotation of the valve shaft to be determined and, thus, a suitable position of rotation of the valve shaft to be easily selected when mounting the actuator on the valve.

### Brief Description of the Drawings

A preferred embodiment of the invention will be described below, reference being made to the accompanying drawings.

Fig. 1 is a perspective view of a first multiway valve with an associated, but only partly illustrated, actuator.

Fig. 2 is a perspective view of a second multiway valve with the same partly illustrated actuator as in Fig. 1.

### Description of the Preferred Embodiment

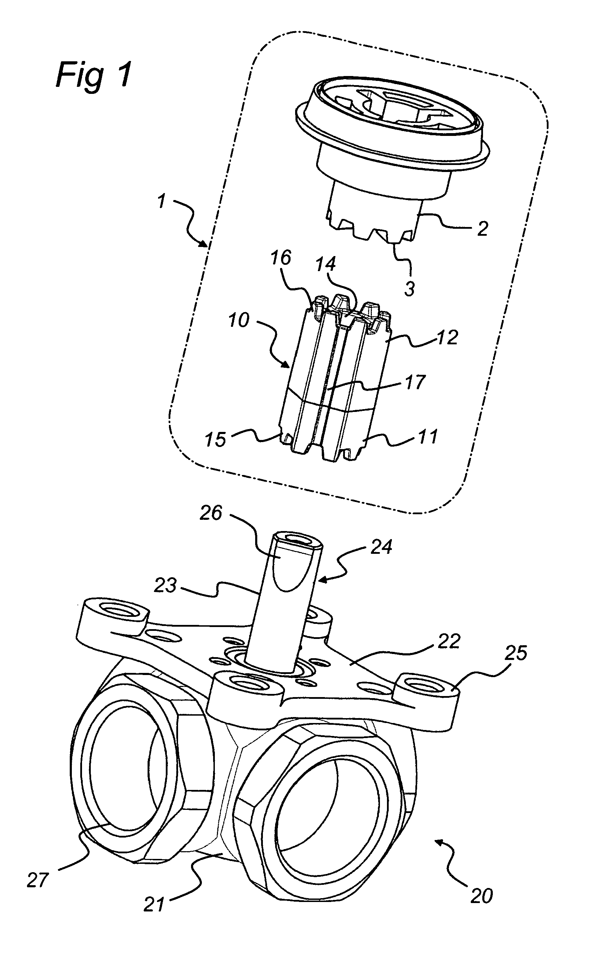

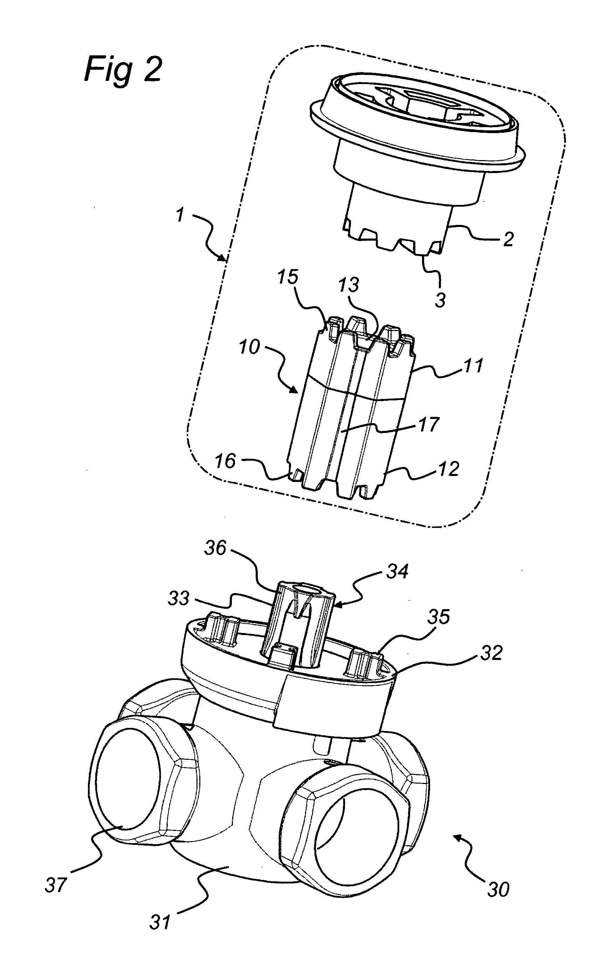

Figures 1 and 2 show an actuator 1 and a connecting member 10 incorporated therein or intended for use therewith according to the invention. While the complete actuator 1 is only schematically indicated in the form of a dashed and dotted line, an operating shaft 2 incorporated therein is illustrated in detail, as is the connecting member 10, by means of continuous lines.

The actuator 1 as such is preferably electrically operated and intended to be connected in known manner to, for example, a temperature sensor, which regulates, with the aid of the actuator, the setting and rotating position of a rotatable valve shaft 24; 34.

The valve shaft 24; 34 is mounted in a multiway valve 20; 30, a first embodiment of which is shown in Fig. 1 and a second embodiment in Fig. 2. Both valves 20; 30 comprise a valve housing 21; 31 with multiple valve ports 27; 37. They each have a valve head 22; 32 from which projects the rotatable valve shaft 24; 34.

The valve heads 22; 32 have connecting means 25; 35 for non-rotatable connection of the actuator 1 to the valve housing 21; 31. In the first valve 20, these connecting means are constituted by four screw holes 25, which are evenly spaced about the valve shaft 24 and formed in a metal valve head 22, and in the second valve by four studs 35, which are evenly spaced about the valve shaft 34 and project from a plastic valve head 32. In this context, the latter valve head 32 is intended to be form-fittingly secured against rotation to the valve housing 31, whereas the former valve head 22 is usually screwed onto the valve housing 21.

As shown in Figs 1 and 2, the valve shafts 24; 34 each have an outer end, designated respectively by the reference numerals 23 and 33 and having connecting surfaces 26; 36. In the valve 20 in Fig. 1, the connecting surfaces consist of a surface portion 26 which is chamfered towards the end of the valve shaft 24. In the valve 30 in Fig. 2, the connecting surfaces consist instead of three longitudinal protrusions or ribs 36 which are distributed along the outer end 33 of the valve shaft 34. In other words, the two outer ends 23, 33 have completely different outlines and, as illustrated, also completely different lengths.

The connecting surfaces 26; 36 mentioned above are arranged to cooperate in non-rotatable manner with a first end of a connecting member 10, which through an opposite second end is arranged to cooperate in non-rotatable manner with the rotatable operating shaft 2 of the actuator 1. To make this possible using one and the same actuator 1, the connecting member 10 is turnable according to the invention. This complicates the description thereof in that, for example, the first end of the connecting member 10 in the valve 20 in Fig. 1 is the end that is designated 11, whereas the first end of the connecting member 10 in the valve 30 shown in Fig. 2 is the end that is designated 12. We have solved this problem by designating, wherever appropriate - for example in the patent claims - both the first and second end of the connecting member 11, 12. In the two following paragraphs, however, the situation is described one independently of the other, first in connection with the embodiment in Fig. 1 and then in connection with the embodiment in Fig. 2.

Fig. 1 illustrates the turnable connecting member 10 according to the invention in a first position of use, in which the first end of the connecting member 10 is the end located in the lower part of the figure and designated 11. Accordingly, the second end is designated 12 in Fig. 1 and is located above said first end 11. The connecting member 10 has at both ends 11, 12 a central opening, the first of which is hidden in Fig. 1 and the second of which is designated 14 and is formed at the other end 12. The first opening (13; see Fig. 2) is arranged to cooperate by form fit in non-rotatable manner with the connecting surfaces on the outer end 23 of the valve shaft 24, i.e. with the chamfered surface portion 26.

In Fig. 2, the turnable connecting member 10 according to the invention is shown in a second position of use, in which the first end of the connecting member 10 is the end located in the lower part of the figure and, thus, designated 12. Accordingly, the second end is designated 11 in Fig. 2 and is located above the first end 12. The connecting member 10 has at both ends 11, 12 a central opening, the first of which is hidden in Fig. 2 and the second of which is designated 13 and is formed at the second end 11. The first opening (14; see Fig. 2) is arranged to cooperate by form fit in non-rotatable manner with the connecting surfaces on the outer end 33 of the valve shaft 34, i.e. the ribs 36.

The openings 13, 14 of both ends 11, 12 of the connecting member 10 are surrounded by gear rims 15, 16. These are identical and arranged to cooperate by form fit and, thus, in non-rotatable manner with corresponding gear teeth 3 on a mating end of identical operating shafts 2 for the actuators 1 in Figs 1 and 2. This means that the same actuator 1 and the same connecting member 10 can be used either for the multiway valve 20 in Fig. 1 or for the multiway valve 30 in Fig. 2.

It will be appreciated that the embodiment of the invention described above can be varied in different ways within the scope of the claims.

For example, it is appropriate to provide a duct (not shown) which extends through the connecting member 10 and which connects the two openings 13, 14 with each other. This allows a screw to be inserted through the operating shaft 2 and the connecting member 10 and the actuator 1 to be secured, with the aid of the screw, to the valve shaft 24, 34 and, thus, to the valve 20, 30.

It is also possible to replace the illustrated gear rims 15, 16, which have gear teeth that are oriented in the same direction as the central openings 13, 14 of the connecting member 10, by other gear rims, for example rims with out-turned or in-turned teeth.

Preferably, the connecting member 10 shown in Figs 1 and 2 is cylindrical and has a hexagonal circumferential surface. However, this is not an imperative necessity and other both cylindrical and non-cylindrical shapes are conceivable as long as the connecting member 10 is turnable.

Finally, it is appropriate, as shown on the connecting member 10, to arrange some form of position indicator preferably in the form of an indicating groove 17, which extends along the connecting member 10 between the two ends 11, 12 of said connecting member 10 and which is arranged to indicate the position of rotation of the valve shaft 24, 34. However, the position indicator may also have a different appearance and may, for example, be a colour coding or a raised arrow.

## Claims

1. An actuator (1) for a multiway valve (20; 30), which comprises a valve housing (21; 31) having a valve head (22; 32) from which projects an outer end (23; 33) of a rotatable valve shaft (24; 34), the valve head (22; 32) having connecting means (25; 35) for non-rotatable connection of the actuator (1) to the valve housing (21; 31) and the outer end (23; 33) of the valve shaft (24; 34) having connecting surfaces (26; 36) arranged to cooperate in non-rotatable manner with a first end (11, 12) of a connecting member (10), which by an opposite second end (11, 12) is arranged to cooperate in non-rotatable manner with a rotatable operating shaft (2) of the actuator (1), **characterised in that** the connecting member (10) is turnable and that it at both ends (11, 12) has, on the one hand, a central opening (13, 14), one (13) of which is arranged to cooperate in non-rotatable manner with the connecting surfaces (26) on the outer end (23) of a first type of valve shaft (24) and the other (14) of which is arranged to cooperate in non-rotatable manner with the connecting surfaces (36) on the outer end (33) of a second type of valve shaft (34), and, on the other hand, a gear rim (15, 16), which surrounds the associated opening (13, 14) and which, when facing away from the valve head (22; 32), is arranged to cooperate in non-rotatable manner with gear teeth (3) provided on a mating end of one and the same type of operating shaft (2).

2. An actuator (1) according to claim 1, wherein the central openings (13, 14) are connected to each other to form a duct which extends through the whole connecting member (10).

3. An actuator (1) according to claim 1 or 2, wherein the gear rims (15, 16) are identical in shape.

4. An actuator (1) according to any one of claims 1-3, wherein the gear rims (15, 16) have gear teeth that are oriented in the same direction as the openings (13, 14).

5. An actuator (1) according to any one of claims 1-4, wherein the connecting member (10) is cylindrical and has a hexagonal circumferential surface.

6. An actuator (1) according to any one of claims 1-5, wherein the connecting member (10) has an indicating groove (17), which extends along the connecting member (10) between its two ends (11, 12) and which is arranged to indicate the position of rotation of the valve shaft (23; 33).

7. A connecting member (10) for a valve actuator (1), **characterised in that** it is turnable and that it at both ends (11, 12) has, on the one hand, a central opening (13, 14), one (13) of which is arranged to cooperate in non-rotatable manner with connecting surfaces (26) on an outer end (23) of a first type of valve shaft (24) and the other (14) of which is arranged to cooperate in non-rotatable manner with connecting surfaces (36) on an outer end (33) of a second type of valve shaft (34), and, on the other hand, a gear rim (15, 16), which surrounds the associated opening (13, 14) and which, when facing the valve actuator (1), is arranged to cooperate in non-rotatable manner with gear teeth (3) provided on a mating end of an operating shaft (2), which forms part of the valve actuator (1).

8. A connecting member (10) according to claim 7, wherein the central openings (13, 14) are connected to each other to form a duct which extends through the whole connecting member (10).

9. A connecting member (10) according to claim 7 or 8, wherein the gear rims (15, 16) are identical in shape.

10. A connecting member (10) according to any one of claims 7-9, wherein the gear rims (15, 16) have gear teeth that are oriented in the same direction as the openings (13, 14).

11. A connecting member (10) according to any one of claims 7-10, which connecting member (10) is cylindrical and has a hexagonal circumferential surface.

12. A connecting member (10) according to any one of claims 7-11, which connecting member (10) has an indicating groove (17), which extends along the connecting member (10) between its two ends (11, 12) and which is arranged to indicate the position of rotation of the valve shaft (23; 33).

## Patentansprüche

1. Aktuator (1) für ein Mehrwegventil (20; 30), das ein Ventilgehäuse (21; 31) umfasst, das einen Ventilkopf (22; 32) aufweist, von dem ein äußeres Ende (23; 33) einer drehbaren Ventilwelle (24; 34) hervorsteht, wobei der Ventilkopf (22; 32) Verbindungsmittel (25; 35) für eine nicht-drehbare Verbindung des Aktuators (1) mit dem Ventilgehäuse (21; 31) aufweist und das äußere Ende (23; 33) der Ventilwelle (24; 34) Verbindungsflächen (26; 36) aufweist, die dafür geeignet sind, in nicht-drehbarer Weise mit einem ersten Ende (11, 12) eines Verbindungselements (10) zusammenzuwirken, das an einem gegenüberliegenden zweiten Ende (11, 12) dafür geeignet ist, in einer nicht-drehbaren Weise mit einer drehbaren Betätigungswelle (2) des Aktuators zusammenzuwirken, **dadurch gekennzeichnet, dass** das Verbindungselement (10) umgedreht werden kann und dass es an beiden Enden (11, 12) einerseits eine mittige Öffnung (13, 14) aufweist, von denen eine (13) dafür geeignet ist, in nicht-drehbarer Weise mit den Verbindungsflächen (26) an dem äußeren Ende (23) eines ersten Typs einer Ventilwelle (24) zusammenzuwirken, und von denen die andere (14) dafür geeignet ist, in nicht-drehbarer Weise mit den Verbindungsflächen (36) an dem äußeren Ende (33) eines zweiten Typs einer Ventilwelle (34) zusammenzuwirken, und anderseits einen Zahnrand (15, 16) aufweist, der die zugehörige Öffnung (13, 14) umgibt und der, wenn er von dem Ventilkopf (22; 32) fort weist, dafür geeignet ist, in nicht-drehbarer Weise mit Zähnen (3) zusammenzuwirken, die an einem komplementären Ende ein und desselben Typs einer Betätigungswelle (2) angeordnet sind.

2. Aktuator (1) nach Anspruch 1, wobei die mittigen Öffnungen (13, 14) miteinander verbunden sind, um einen Durchgang zu bilden, der sich durch das gesamte Verbindungselement (10) hindurch erstreckt.

3. Aktuator (1) nach Anspruch 1 oder 2, wobei die Zahnränder (15, 16) eine identische Form aufweisen.

4. Aktuator (1) nach einem der Ansprüche 1-3, wobei die Zahnränder (15, 16) Zähne aufweisen, die in dieselbe Richtung ausgerichtet sind wie die Öffnungen (13, 14).

5. Aktuator (1) nach einem der Ansprüche 1-4, wobei das Verbindungselement (10) zylindrisch ist und eine sechseckige Umfangsfläche aufweist.

6. Aktuator (1) nach einem der Ansprüche 1-5, wobei das Verbindungselement (10) eine Indikatornut (17) aufweist, die sich entlang des Verbindungselements (10) zwischen seinen beiden Enden (11, 12) erstreckt und die dafür geeignet ist, die Drehposition der Ventilwelle (23; 33) anzuzeigen.

7. Verbindungselement (10) für einen Ventilaktuator (1), **dadurch gekennzeichnet, dass** es umgedreht werden kann und dass es an beiden Enden (11, 12) einerseits eine mittige Öffnung (13, 14) aufweist, von denen eine (13) dafür geeignet ist, in nicht-drehbarer Weise mit Verbindungsflächen (26) an einem äußeren Ende (23) eines ersten Typs einer Ventilwelle (24) zusammenzuwirken, und von denen die andere (14) dafür geeignet ist, in nicht-drehbarer Weise mit Verbindungsflächen (36) an einem äußeren Ende (33) eines zweiten Typs einer Ventilwelle (34) zusammenzuwirken, und anderseits einen Zahnrand (15, 16) aufweist, der die zugehörige Öffnung (13, 14) umgibt und der, wenn er dem Ventilaktuator (1) zugewandt ist, dafür geeignet ist, in nicht-drehbarer Weise mit Zähnen (3) zusammenzuwirken, die an einem komplementären Ende einer Betätigungswelle (2) angeordnet sind, die einen Teil des Ventilaktuators (1) bildet.

8. Verbindungselement (10) nach Anspruch 7, wobei die mittigen Öffnungen (13, 14) miteinander verbunden sind, um einen Durchgang zu bilden, der sich durch das gesamte Verbindungselement (10) hindurch erstreckt.

9. Verbindungselement (10) nach Anspruch 7 oder 8, wobei die Zahnränder (15, 16) eine identische Form aufweisen.

10. Verbindungselement (10) nach einem der Ansprüche 7-9, wobei die Zahnränder (15, 16) Zähne aufweisen, die in dieselbe Richtung ausgerichtet sind wie die Öffnungen (13, 14).

11. Verbindungselement (10) nach einem der Ansprüche 7-10, wobei das Verbindungselement (10) zylindrisch ist und eine sechseckige Umfangsfläche aufweist.

12. Verbindungselement (10) nach einem der Ansprüche 7-11, wobei das Verbindungselement (10) eine Indikatornut (17) aufweist, die sich entlang des Verbindungselements (10) zwischen seinen beiden Enden (11, 12) erstreckt und die dafür geeignet ist, die Drehposition der Ventilwelle (23; 33) anzuzeigen.

## Revendications

1. Actionneur (1) pour vanne multi-voies (20 ;30), qui comprend un logement de vanne (21 ;31) possédant une tête de vanne (22 ; 32) à partir de laquelle se projette une extrémité extérieure (23 ;33) d'une tige de vanne rotative (24 ;34), la tête de vanne (22 ;32) possédant des moyens de raccordement (25 ;35) en vue du raccordement non rotatif de l'actionneur (1) au logement de vanne (21 ;31) et l'extrémité extérieure (23 ; 33) de la tige de vanne (24 ; 34) possédant des surfaces de raccordement (26 ; 36) agencées afin de coopérer de manière non rotative avec une première extrémité (11,12) d'un élément de raccordement (10), lequel par une seconde extrémité opposée (11,12) est agencé afin de coopérer de manière non rotative avec une tige opérationnelle rotative (2) de l'actionneur (1), **caractérisé en ce que** l'élément de raccordement (10) est tournant et qu'il possède aux deux extrémités,d'une part une ouverture centrale (13,14), dont une (13) est agencée afin de coopérer de manière non rotative avec les surfaces de raccordement (36) sur l'autre extrémité (33) d'un second type de tige de vanne (34) et, d'autre part, une couronne dentée (15,16) qui entoure l'ouverture associée (13,14) et qui, quand elle se détourne de la tête de vanne (22 ;32), est agencée afin de coopérer de manière non rotative avec les dents d'engrenage (3) prévues sur une extrémité de couplage d'une et du même type de tige opérationnelle (2).

2. Actionneur (1) selon la revendication 1, dans lequel les ouvertures centrales (13,14) sont raccordées l'une à l'autre afin de former un conduit qui s'étend à travers la totalité de l'élément de raccordement (10).

3. Actionneur (1) selon la revendication 1 ou 2, dans lequel les couronnes dentées (15,16) sont de forme identique.

4. Actionneur (1) selon une quelconque des revendications 1 à 3, dans lequel les couronnes dentées (15,16) possèdent des dents d'engrenage qui sont orientées dans la même direction que les ouvertures (13,14).

5. Actionneur (1) selon une quelconque des revendications 1 à 4, dans lequel l'élément de raccordement (10) est cylindrique et possède une surface circonférentielle hexagonale.

6. Actionneur (1) selon une quelconque des revendications 1 à 5, dans lequel l'élément de raccordement (10) possède une gorge indicatrice (17), qui s'étend le long de l'élément de raccordement (10) entre ses deux extrémités (11,12) et qui est agencée afin d'indiquer la position de rotation de la tige de vanne (23 ;33).

7. Elément de raccordement (10) pour actionneur de vanne, **caractérisé en ce qu'**il est tournant et qu'il possède aux deux extrémités (11,12), d'une part, une ouverture centrale (13,14), dont une (13) est agencée afin de coopérer de manière non rotative avec des surfaces de raccordement (26) sur une autre extrémité (23) d'un premier type de tige de vanne (24) et l'autre (14) est agencée afin de coopérer de manière non rotative avec des surfaces de raccordement (36) sur une extrémité extérieure (33) d'un second type de tige de vanne (34) et, d'autre part, une couronne dentée (15,16) qui entoure l'ouverture associée (13,14) et qui, quand elle fait face à l'actionneur de vanne (1) est agencée afin de coopérer de manière non rotative avec une couronne dentée (3) prévue sur une extrémité de couplage d'une tige opérationnelle (2) qui fait partie de l'actionneur de vanne (1).

8. Elément de raccordement (10) selon la revendication 7, dans lequel les ouvertures centrales (13,14) sont raccordées l'une à l'autre afin de former une conduite qui s'étend à travers la totalité de l'élément de raccordement (10).

9. Elément de raccordement (10) selon la revendication 7 ou 8, dans lequel les couronnes dentées (15,16) sont de forme identique.

10. Elément de raccordement (10) selon une quelconque des revendications 7 à 9, dans lequel les couronnes dentées (15,16) possèdent des dents d'engrenage qui sont orientées dans la même direction que les ouvertures (13,14).

11. Elément de raccordement (10) selon une quelconque des revendications 7 à 10, lequel élément de raccordement (10) est cylindrique et possède une surface circonférentielle hexagonale.

12. Elément de raccordement (10) selon une quelconque des revendications 7 à 11, lequel élément de raccordement (10) possède une gorge indicatrice (17), laquelle s'étend le long de l'élément de raccordement (10) entre ses deux extrémités (11,12) et lequel est agencé afin d'indiquer la position de rotation de la tige de vanne (23 ;33).
